(19) Europäisches Patentamt

European Patent Office

Office européen des brevets

(11) **EP 1 119 940 B1**

(12) **FASCICULE DE BREVET EUROPEEN**

(45) Date de publication et mention
de la délivrance du brevet:
**21.09.2005 Bulletin 2005/38**

(21) Numéro de dépôt: **99942981.4**

(22) Date de dépôt: **15.09.1999**

(51) Int Cl.$^7$: **H04L 9/06**

(86) Numéro de dépôt international:
**PCT/FR1999/002199**

(87) Numéro de publication internationale:
**WO 2000/024156 (27.04.2000 Gazette 2000/17)**

(54) **PROCEDE DE CONTRE-MESURE DANS UN COMPOSANT ELECTRONIQUE METTANT EN OEUVRE UN ALGORITHME DE CRYPTOGRAPHIE A CLE SECRETE**

GEGENMASSNAHMENVERFAHREN IN EINEM ELEKTRONISCHEN BAUELEMENT. DAS EIN ALGORITHMUS MIT EINEM PRIVATEN SCLHÜSSEL VERWENDET

COUNTERMEASURE METHOD IN AN ELECTRONIC COMPONENT USING A SECRET KEY CRYPTOGRAPHIC ALGORITHM

(84) Etats contractants désignés:
**DE ES FR GB IT**

(30) Priorité: **16.10.1998 FR 9812990**

(43) Date de publication de la demande:
**01.08.2001 Bulletin 2001/31**

(73) Titulaire: **GEMPLUS**
**13881 Gémenos Cedex (FR)**

(72) Inventeurs:
- **CLAVIER, Christophe**
  **F-13420 Gémenos (FR)**
- **BENOIT, Olivier**
  **F-13400 Aubagne (FR)**

(56) Documents cités:
**FR-A- 2 672 402**

- YI X ET AL: "A METHOD FOR OBTAINING CRYPTOGRAPHICALLY STRONG 8X8 S-BOXES" IEEE GLOBAL TELECOMMUNICATIONS CONFERENCE, PHOENIX, ARIZONA, NOV. 3 - 8, 1997, vol. 2, 3 novembre 1997 (1997-11-03), pages 689-693, XP000737626 INSTITUTE OF ELECTRICAL AND ELECTRONICS ENGINEERS
- MIYAGUCHI S: "SECRET KEY CIPHERS THAT CHANGE THE ENCIPHERMENT ALGORITHM UNDER THECONTROL OF THE KEY" NTT REVIEW, vol. 6, no. 4, 1 juillet 1994 (1994-07-01), pages 85-90, XP000460342

**Description**

La présente invention concerne un procédé de contre-mesure dans un composant électronique mettant en oeuvre un algorithme de cryptographie à clé secrète. Ils sont utilisés dans des applications où l'accès à des services ou à des données est sévèrement contrôlé. Ils ont une architecture formée autour d'un microprocesseur et de mémoires, dont une mémoire programme qui contient la clé secrète.

Ces composants sont notamment utilisés dans les cartes à puce, pour certaines applications de celles-ci. Ce sont par exemple des applications d'accès à certaines banques de données, des applications bancaires, des applications de télépéage, par exemple pour la télévision, la distribution d'essence ou encore le passage de péages d'autoroutes.

Ces composants ou ces cartes mettent donc en oeuvre un algorithme de cryptographie à clé secrète, dont le plus connu est l'algorithme DES (pour *Data Encryption Standard* dans la littérature anglo-saxonne). D'autres algorithmes à clé secrète existent, comme l'algorithme RC5 ou encore l'algorithme COMP128. Cette liste n'est bien sûr pas exhaustive.

De manière générale et succincte, ces algorithmes ont pour fonction de calculer un message chiffré à partir d'un message appliqué en entrée (à la carte) par un système hôte (serveur, distributeur bancaire...) et de la clé secrète contenue dans la carte, et de fournir en retour au système hôte ce message chiffré, ce qui permet par exemple au système hôte d'authentifier le composant ou la carte, d'échanger des données...

Or il est apparu que ces composants ou ces cartes sont vulnérables à des attaques consistant en une analyse différentielle de consommation en courant et qui permettent à des tiers mal intentionnés de trouver la clé secrète. Ces attaques sont appelées attaques DPA, acronyme anglo-saxon pour *Differential Power Analysis*.

Le principe de ces attaques DPA repose sur le fait que la consommation en courant du microprocesseur exécutant des instructions varie selon la donnée manipulée.

Notamment, une instruction du microprocesseur manipulant un bit de donnée génère deux profils de courant différents selon que ce bit vaut "1" ou "0". Typiquement, si l'instruction manipule un "0", on a à cet instant d'exécution une première amplitude du courant consommé et si l'instruction manipule un "1", on a une deuxième amplitude du courant consommé, différente de la première.

Les caractéristiques des algorithmes de cryptographie sont connues : calculs effectués, paramètres utilisés. La seule inconnue est la clé secrète contenue en mémoire programme. Celle-ci ne peut être déduite de la seule connaissance du message appliqué en entrée et du message chiffré fourni en retour.

Cependant, dans un algorithme de cryptographie, certaines données calculées dépendent seulement du message appliqué en clair en entrée de la carte et de la clé secrète contenue dans la carte. D'autres données calculées dans l'algorithme peuvent aussi être recalculées seulement à partir du message chiffré (généralement fourni en clair en sortie de la carte vers le système hôte) et de la clé secrète contenue dans la carte. Plus précisément, chaque bit de ces données particulières peut être déterminé à partir du message d'entrée ou de sortie, et d'un nombre limité de bits particuliers de la clé.

Ainsi, à chaque bit d'une donnée particulière, correspond une sous-clé formée par un groupe particulier de bits de la clé.

Les bits de ces données particulières qui peuvent être prédites sont appelés dans la suite, bits cibles.

L'idée de base de l'attaque DPA est ainsi d'utiliser la différence du profil de consommation en courant d'une instruction selon qu'elle manipule un "1" ou un "0" et la possibilité de calculer un bit cible par les instructions de l'algorithme à partir d'un message connu d'entrée ou de sortie et d'une hypothèse sur la sous-clé correspondante.

Le principe de l'attaque DPA est donc de tester une hypothèse de sous-clé donnée, en appliquant sur un grand nombre de courbes de mesure en courant, chacune relative à un message d'entrée connu de l'attaquant, une fonction booléenne de sélection, fonction de l'hypothèse de sous-clé, et définie pour chaque courbe par la valeur prédite pour un bit cible.

En faisant une hypothèse sur la sous-clé concernée, on est en effet capable de prédire la valeur "0" ou "1" que va prendre ce bit cible pour un message d'entrée ou de sortie donné.

On peut alors appliquer comme fonction booléenne de sélection, la valeur prédite "0" ou "1" par le bit cible pour l'hypothèse de sous-clé considérée, pour trier ces courbes en deux paquets : un premier paquet regroupe les courbes qui ont vu la manipulation du bit cible à "0" et un deuxième paquet regroupe les courbes qui ont vu la manipulation du bit cible à "1" selon l'hypothèse de sous-clé. En faisant la moyenne de consommation en courant dans chaque paquet, on obtient une courbe de consommation moyenne $M0(t)$ pour le premier paquet et une courbe de consommation moyenne $M1(t)$ pour le deuxième paquet.

Si l'hypothèse de sous-clé est juste, le premier paquet regroupe réellement toutes les courbes parmi les N courbes qui ont vu la manipulation du bit cible à "0" et le deuxième paquet regroupe réellement toutes les courbes parmi les N courbes qui ont vu la manipulation du bit cible à "1". La courbe moyenne de consommation $M0(t)$ du premier paquet aura alors une consommation moyenne partout sauf aux moments de l'exécution des instructions critiques, avec un profil de consommation en courant caractéristique de la manipulation du bit cible à "0" ($profil_0$). En d'autres termes, pour toutes ces courbes tous les bits manipulés ont eu autant de chances de valoir "0" que de valoir "1", sauf le bit cible qui a toujours eu la valeur "0". Ce qui peut s'écrire :

$$M0(t) = [(profil_0 + profil_1)/2]_{t^1 tci} + [profil_0]_{tci}$$

soit

$$M0(t) = [Vm_t]_{t^1 tci} + [profil_0]_{tci}$$

où tci représente les instants critiques, auxquels une instruction critique a été exécutée.

De même, la courbe moyenne de consommation M1(t) du deuxième paquet correspond à une consommation moyenne partout sauf aux moments de l'exécution des instructions critiques, avec un profil de consommation en courant caractéristique de la manipulation du bit cible à "1" ($profil_1$). On peut écrire :

$$M1(t) = [(profil_0 + profil_1)/2]_{t^1 tci} + [profil_1]_{tci}$$

soit

$$M1(t) = [Vm_t]_{t^1 tci} + [profil_1]_{tci}$$

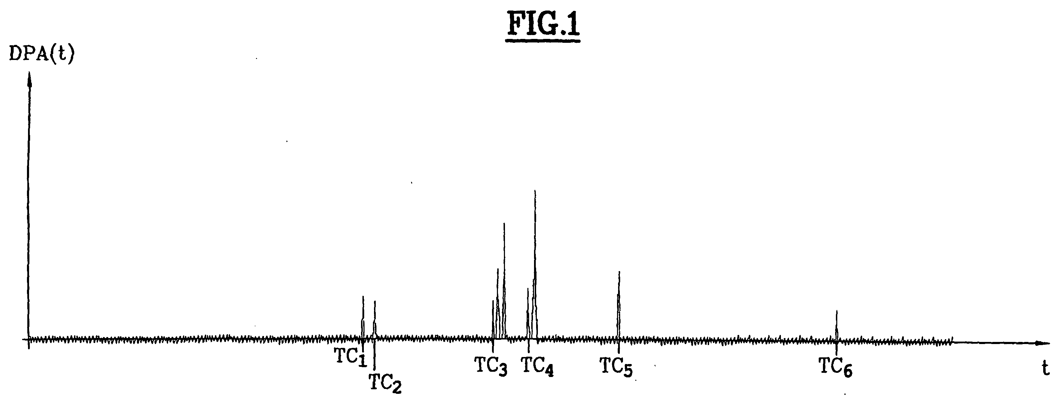

On a vu que les deux profils $profil_0$ et $profil_1$ ne sont pas égaux. La différence des courbes M0(t) et M1(t) donne alors un signal DPA(t) dont l'amplitude est égale à $profil_0 - profil_1$ aux instants critiques tci d'exécution des instructions critiques manipulant ce bit, c'est à dire, dans l'exemple représenté sur la figure 1, aux endroits tc0 à tc6 et dont l'amplitude est à peu près égale à zéro en dehors des instants critiques.

Si l'hypothèse de sous-clé est fausse, le tri ne correspond pas à la réalité. Statistiquement, il y a alors dans chaque paquet, autant de courbes ayant vu réellement la manipulation du bit cible à "0" que de courbes ayant vu la manipulation du bit cible à "1". La courbe moyenne résultante M0(t) se situe alors autour d'une valeur moyenne donnée par $(profil_0 + profil_1)/2 = Vm$, car pour chacune des courbes, tous les bits manipulés, y compris le bit cible ont autant de chances de valoir "0" que de valoir "1".

Le même raisonnement sur le deuxième paquet conduit à une courbe moyenne de consommation en courant M1(t) dont l'amplitude se situe autour d'une valeur moyenne donnée par $(profil_0 + profil_1)/2 = Vm$.

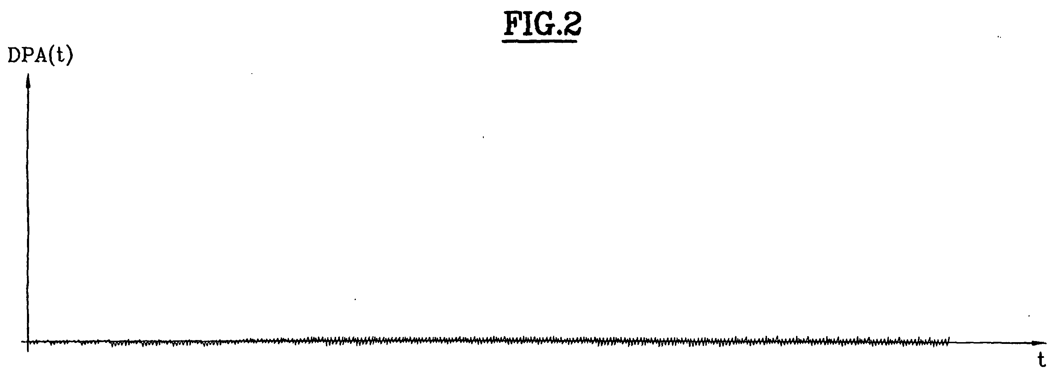

Le signal DPA(t) fourni par la différence M0(t) - M1(t) est dans ce cas sensiblement égal à zéro. Le signal DPA(t) dans le cas d'une hypothèse de sous-clé fausse est représenté sur la figure 2.

Ainsi l'attaque DPA exploite la différence du profil de consommation en courant pendant l'exécution d'une instruction suivant la valeur du bit manipulé, pour effectuer un tri de courbes de consommation en courant selon une fonction de sélection booléenne pour une hypothèse de sous-clé donnée. En effectuant une analyse différentielle de la consommation moyenne en courant entre les deux paquets de courbes obtenus, on obtient un signal d'information DPA(t).

Le déroulement d'une attaque DPA consiste alors globalement:

a- à tirer N messages aléatoires (par exemple N égal 1000);

b- à faire exécuter l'algorithme par la carte pour chacun des N messages aléatoires, en relevant la courbe de consommation en courant à chaque fois (mesurée sur la borne d'alimentation du composant);

c- à faire une hypothèse sur une sous-clé;

d- à prédire, pour chacun des messages aléatoires, la valeur prise par un des bits cibles dont la valeur ne dépend que des bits du message (d'entrée ou de sortie) et de la sous-clé prise en hypothèse, pour obtenir la fonction de sélection booléenne;

e- à trier les courbes selon cette fonction de sélection booléenne (c'est à dire selon la valeur "0" ou "1" prédite pour ce bit cible pour chaque courbe sous l'hypothèse de sous-clé);

f- à calculer dans chaque paquet la courbe résultante de consommation moyenne en courant;

g- à effectuer la différence de ces courbes moyennes, pour obtenir le signal DPA(t).

Si l'hypothèse sur la sous-clé est juste, la fonction de sélection booléenne est juste et les courbes du premier paquet correspondent réellement aux courbes pour lesquelles le message appliqué en entrée ou en sortie a donné un bit cible à "0" dans la carte et les courbes du deuxième paquet correspondent réellement aux courbes pour lesquelles le message appliqué en entrée ou en sortie a donné un bit cible à "1" dans la carte.

On est dans le cas de la figure 1 : le signal DPA(t) n'est donc pas nul aux instants tc0 à tc6 correspondant à l'exécution des instructions critiques (celles qui manipulent le bit cible). Il suffit qu'il y ait au moins un instant critique dans la période d'acquisition.

On notera que l'attaquant n'a pas besoin de connaître avec précision les instants critiques.

Si l'hypothèse de sous-clé n'est pas juste, le tri ne correspond pas à la réalité et on a alors dans chaque paquet autant de courbes correspondant en réalité à un bit cible à "0" que de courbes correspondant à un bit cible à "1". Le signal DPA(t) est sensiblement nul partout (cas représenté à la figure 2). Il faut retourner à l'étape c- et faire une nouvelle hypothèse sur la sous-clé.

Si l'hypothèse s'avère juste, on peut passer à l'évaluation d'autres sous-clés, jusqu'à avoir reconstitué la clé au maximum. Par exemple, avec un algorithme DES, on utilise une clé de 64 bits, dont seulement 56 bits utiles. Avec une attaque DPA, on est capable de reconstituer au moins 48 bits des 56 bits utiles.

Trois documents se rapprochant de l'invention peuvent être cités.

Le premier document de Yi X. dont le titre anglais est «*A method for obtaining cryptographically strong 8X8 S-BOXES»*, document publié à la conférence sur les télécommunications à Phoenix, Arizona, Etats-Unis d'Amérique, du 3 au 8 novembre 1997, décrit une méthode pour développer facilement et efficacement par ordinateur des boites-S (boites de substitution) fortes. L'algorithme DES pourrait être cassé si des boites-S pauvres étaient utilisées. Les boites inverses sont également fortes. La méthode de ce document décrit une bonne propriété contre l'attaque différentielle permettant par l'utilisation de tables de constantes SBOX d'accroître la sécurité des systèmes cryptographiques.

Le second document de Miyaguchi S. dont le titre anglais est «*Secret key ciphers that change the encipherment algorithm under the control of the key»,* document publié dans la revue « NTT REVIEW », vol. 6, n° 4, du 1er juillet 1994, décrit un algorithme principal secret de chiffrement qui change dynamiquement sous la commande de la clé de chiffrement, par substitutions/ permutations entre les tables de constantes élémentaires S1 à S8 d'une table de constantes S-BOX. La méthode est résistante contre les attaques qui calculent la clé en utilisant des paires de texte en clair et leur bloc de texte chiffré. Il contient un exemple avec un chiffre modifié de DES.

Le troisième document, le FR 2 672 402, publié le 7 août 1992, décrit un procédé et dispositif de génération de nombres pseudo-aléatoires uniques utilisant un programme de cryptage du type DES s'appliquant à la réalisation de cartes à puce.

La présente invention a pour but de mettre en oeuvre dans un composant électronique, un procédé de contre-mesure qui entraîne un signal DPA(t) nul, même dans le cas où l'hypothèse de sous-clé est juste.

De cette façon, rien ne permet de distinguer le cas de l'hypothèse de sous-clé juste des cas d'hypothèses de sous-clé fausses. Par cette contre-mesure, le composant électronique est paré contre les attaques DPA.

Selon l'invention, le procédé de contre-mesure permet de rendre imprédictibles les bits cibles, c'est à dire les données manipulées par des instructions critiques.

En effet, du fait de la contre-mesure, pour chaque message appliqué en entrée, un bit cible manipulé par une instruction critique prend la valeur 0 ou 1 avec une égale probabilité. Dans chaque paquet de courbes que fera l'attaquant sous une hypothèse de sous-clé donnée, au moyen de la fonction de sélection booléenne qu'il aura calculée, on aura autant de courbes ayant réellement manipulé un bit cible "0" que de courbes ayant réellement manipulé un bit cible à "1". Le signal DPA(t) sera toujours nul, que l'hypothèse de sous-clé soit juste ou non.

Dans l'invention, on s'intéresse plus particulièrement à l'algorithme de cryptographie DES.

Un tel algorithme comprend seize tours de calcul identiques.

Dans un tel algorithme, on a pu mettre en évidence que les données prédictibles par un attaquant se situent au premier tour et au dernier tour, et que les instructions critiques au sens de l'attaque DPA se situent dans les trois premiers tours et les trois derniers tours.

Dans l'invention, on a plus particulièrement cherché un moyen de rendre imprédictibles les données manipulées par ces instructions critiques des trois premiers et trois derniers tours, tout en obtenant le bon message chiffré en sortie.

Un but de l'invention est donc de rendre imprédictibles les données manipulées par les instructions critiques, tout en obtenant le bon résultat final (message chiffré C).

Une solution à ces différents problèmes techniques a été trouvée dans la formation d'un groupe (G1) comprenant au moins les trois premiers tours et d'un autre groupe (G4) comprenant au moins les trois derniers tours, et dans l'utilisation dans ces groupes de moyens pour rendre imprédictibles les données manipulées par les instructions critiques contenues dans ces tours.

Selon l'invention, les résultats en sortie de chaque groupe sont justes.

Telle que caractérisée, l'invention concerne donc un procédé de contre-mesure dans un composant électronique mettant en oeuvre un algorithme cryptographique à clé secrète pour calculer un message chiffré à partir d'un message d'entrée, la mise en oeuvre de l'algorithme comprenant seize tours de calcul, chaque tour utilisant des premiers moyens pour fournir une donnée de sortie à partir d'une donnée d'entrée, la donnée de sortie et/ou des données dérivées étant manipulées par des instructions critiques dans les trois premiers et les trois derniers tours. Selon l'invention, on forme un groupe comprenant les trois premiers tours au moins et un autre groupe comprenant les trois derniers tours au moins, et on associe à chacun de ces groupes une première séquence utilisant les premiers moyens dans chaque tour et une deuxième séquence utilisant d'autres moyens dans certains tours au moins, les dites première et deuxième séquences étant telles qu'elles fournissent un même résultat en sortie du dernier tour de chaque groupe pour un même message d'entrée donné, le choix de la séquence à exécuter dans les groupes concernés étant fonction d'une loi statistique de probabilité un demi, pour rendre imprédictibles toutes les données manipulées par les dites instructions critiques.

Dans un mode de réalisation, on forme quatre groupes de quatre tours consécutifs chacun.

Dans un autre mode de réalisation, on forme deux groupes comprenant respectivement les trois premiers et les trois derniers tours.

D'autres caractéristiques et avantages de l'invention sont détaillés dans la description suivante faite à titre indicatif et nullement limitatif et en référence aux dessins annexés, dans lesquels :

- les figures 1 et 2 déjà décrites représentent le signal DPA(t) que l'on peut obtenir en fonction d'une hypothèse sur une sous-clé de la clé secrète K, selon une attaque DPA;

- les figures 3 et 4 sont des organigrammes représentant les premiers tours et les derniers tours de l'algorithme DES;

- la figure 5 est un schéma-bloc de l'opération SBOX utilisée dans l'algorithme DES;

- la figure 6 montre un exemple de table de constante élémentaire à une entrée et une sortie utilisée dans l'opération SBOX;

- la figure 7 représente un premier exemple d'organigramme d'exécution du DES avec un procédé de contre-mesure selon l'invention;

- la figure 8 est un organigramme des premiers tours du DES selon une deuxième séquence du procédé de contre-mesure selon le premier exemple représenté à la figure 7;

- Les figures 9 et 10 représentent respectivement une deuxième et une troisième tables de constantes élémentaires utilisées dans l'invention;

- la figure 11 représente un deuxième exemple d'organigramme d'exécution du DES avec un procédé de contre mesure selon l'invention;

- les figures 12 et 13 sont des organigrammes des premiers tours de DES respectivement selon la deuxième séquence et la première séquence du procédé de contre-mesure selon le deuxième exemple représenté à la figure 11;

- les figures 14 et 15 sont des organigrammes relatifs à un troisième mode d'application du procédé de contre-mesure selon l'invention;

- la figure 16 représente une troisième table de constantes élémentaire utilisée dans ce quatrième mode d'application de l'invention;

- la figure 17 représente un organigramme d'exécution du DES selon une variante du troisième mode d'application du procédé de contre-mesure selon l'invention; et

- la figure 18 représente un schéma-bloc simplifié d'une carte à puce comportant un composant électronique dans lequel le procédé de contre-mesure selon l'invention est mis en oeuvre.

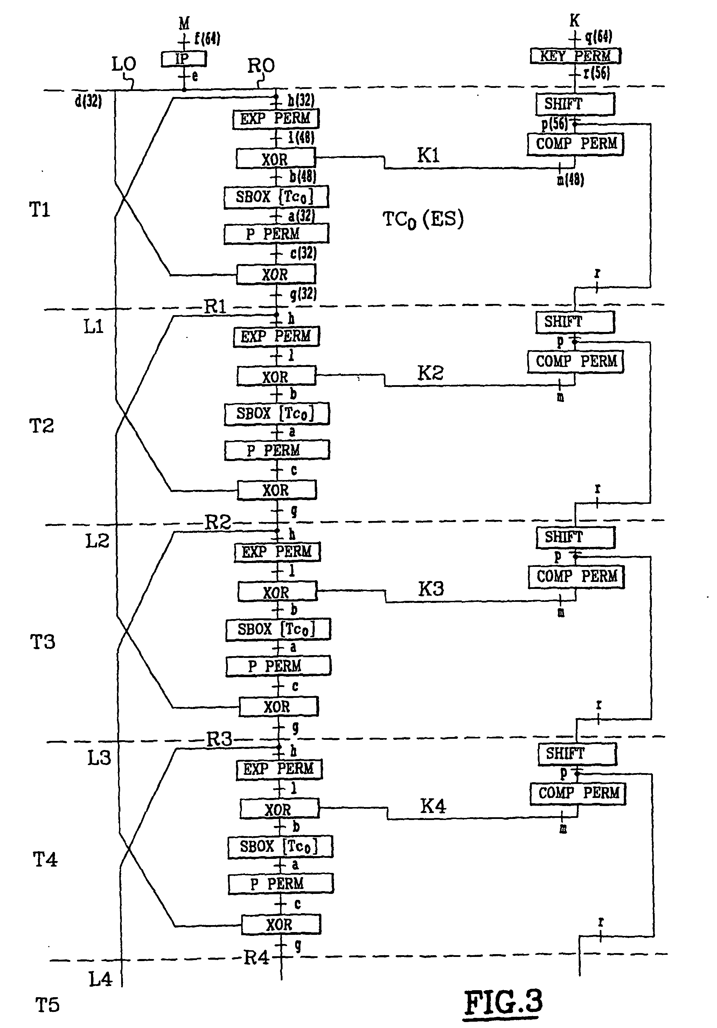

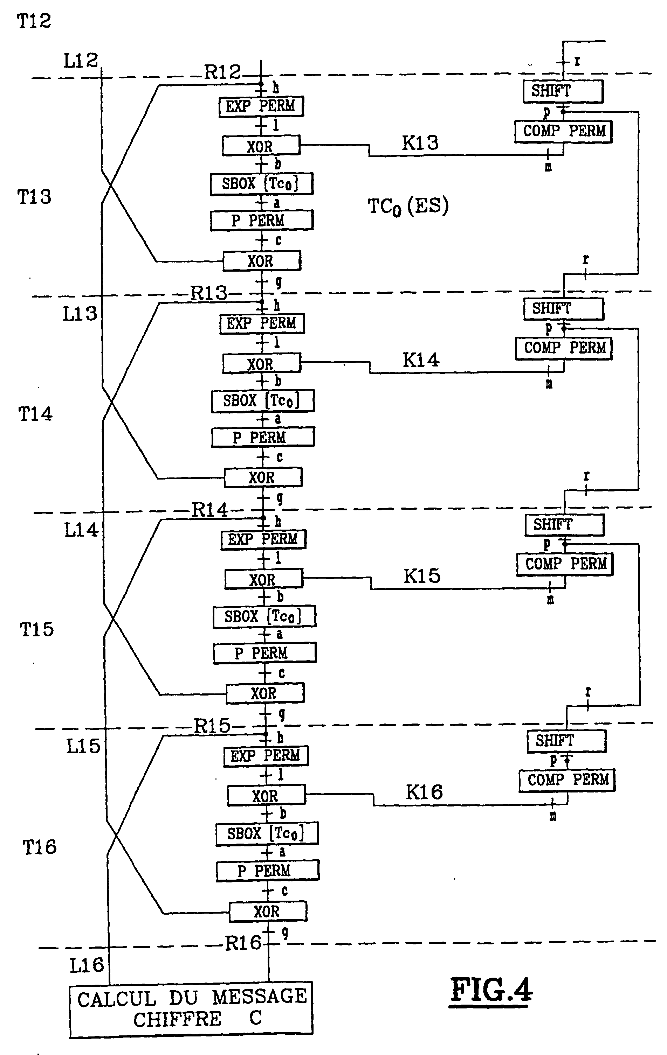

L'algorithme cryptographique à clé secrète DES (dans la suite on parlera plus simplement du DES ou de l'algorithme DES) comporte 16 tours de calcul, notés T1 à T16, comme représenté sur les figures 3 et 4.

Le DES débute par une permutation initiale IP sur le message d'entrée M (figure 3). Le message d'entrée M est un mot f de 64 bits. Après permutation, on obtient un mot e de 64 bits, que l'on coupe en deux pour former les paramètres d'entrée L0 et R0 du premier tour (T1). L0 est un mot d de 32 bits contenant les 32 bits de poids forts du mot e. R0 est un mot h de 32 bits contenant les 32 bits de poids faibles du mot e.

La clé secrète K, qui est un mot q de 64 bits subit elle-même une permutation et une compression pour fournir un mot r de 56 bits.

Le premier tour comprend une opération EXP PERM sur le paramètre R0, consistant en une expansion et une permutation, pour fournir en sortie un mot 1 de 48 bits.

Ce mot l est combiné à un paramètre K1, dans une opération de type OU EXCLUSIF notée XOR, pour fournir un mot b de 48 bits. Le paramètre K1 qui est un mot m de 48 bits est obtenu du mot r par un décalage d'une position (opération notée SHIFT sur les figures 3 et 4) suivi d'une permutation et d'une compression (opération notée COMP PERM).

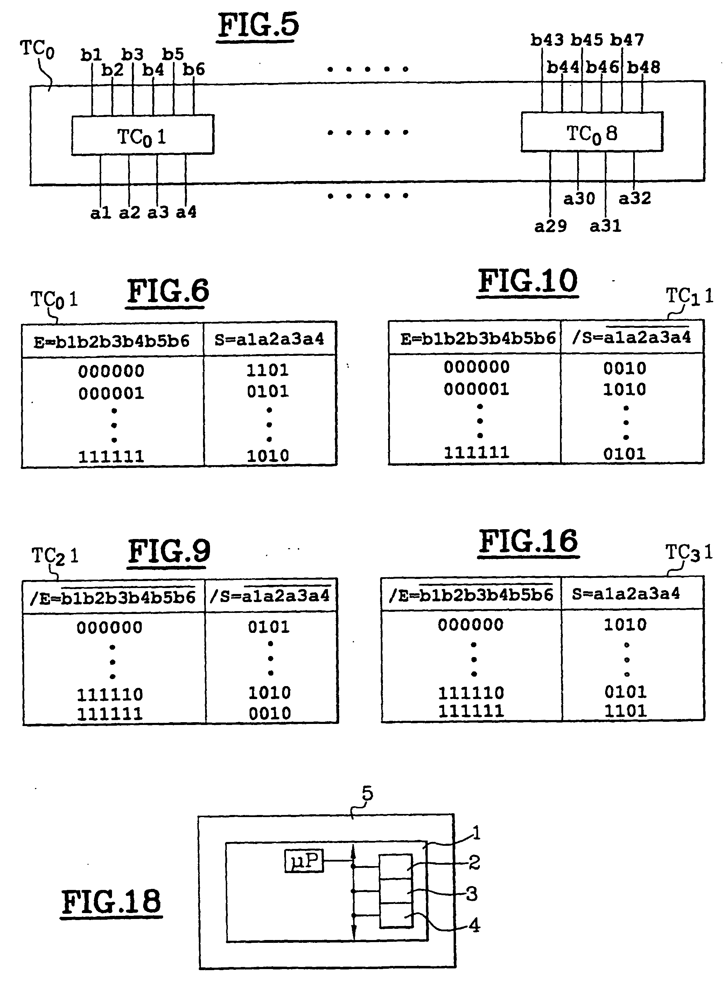

Le mot b est appliqué à une opération notée SBOX, en sortie de laquelle on obtient un mot a de 32 bits. Cette opération particulière sera expliquée plus en détail en relation avec les figures 5 et 6.

Le mot a subit une permutation P PERM, donnant en sortie le mot c de 32 bits.

Ce mot c est combiné au paramètre d'entrée L0 du premier tour T1, dans une opération logique de type OU EXCLUSIF, notée XOR, qui fournit en sortie le mot g de 32 bits.

Le mot h (=R0) du premier tour fournit le paramètre d'entrée L1 du tour suivant (T2) et le mot g du premier tour fournit le paramètre d'entrée R1 du tour suivant. Le mot p du premier tour fournit l'entrée r du tour suivant.

Les autres tours T2 à T16 se déroulent de façon similaire, excepté en ce qui concerne l'opération de décalage SHIFT qui se fait sur une ou deux positions selon les tours considérés.

Chaque tour Ti reçoit ainsi en entrée les paramètres Li-1, Ri-1 et r et fournit en sortie les paramètres Li et Ri et r pour le tour suivant Ti+1.

En fin d'algorithme DES (figure 4), le message chiffré est calculé à partir des paramètres L16 et R16 fournis par le dernier tour T16.

Ce calcul du message chiffré C comprend en pratique les opérations suivantes :

- formation d'un mot e' de 64 bits en inversant la position des mots L16 et R16, puis en les concaténant;

- application de la permutation IP$^{-1}$ inverse de celle de début de DES, pour obtenir le mot f' de 64 bits formant le message chiffré C.

L'opération SBOX est détaillée sur les figures 5 et 6. Elle comprend une table de constantes $TC_0$ pour fournir une donnée de sortie a en fonction d'une donnée d'entrée b.

En pratique, cette table de constantes $TC_0$ se présente sous la forme de huit tables de constantes élémentaires $TC_0 1$ à $TC_0 8$, chacune recevant en entrée seulement 6 bits du mot b, pour fournir en sortie seulement 4 bits du mot a.

Ainsi, la table de constante élémentaire $TC_01$ représentée sur la figure 6 reçoit comme donnée d'entrée, les bits b1 à b6 du mot b et fournit comme donnée de sortie les bits a1 à a4 du mot a.

En pratique ces huit tables de constantes élémentaires $TC_01$ à $TC_08$ sont mémorisées en mémoire programme du composant électronique.

Dans l'opération SBOX du premier tour T1, un bit particulier de la donnée a de sortie de la table de constante $TC_0$ dépend de seulement 6 bits de la donnée b appliquée en entrée, c'est à dire de seulement 6 bits de la clé secrète K et du message d'entrée (M).

Dans l'opération SBOX du dernier tour T16, un bit particulier de la donnée a de sortie de la table de constante $TC_0$ peut être recalculé à partir de seulement 6 bits de la clé secrète K et du message chiffré (C).

Or si on reprend le principe de l'attaque DPA, si on choisit comme bit cible un bit de la donnée de sortie a, il suffit de faire une hypothèse sur 6 bits de la clé K, pour prédire la valeur d'un bit cible pour un message d'entrée (M) ou de sortie (C) donné. En d'autres termes, pour le DES, il suffit de faire une hypothèse sur une sous-clé de 6 bits.

Dans une attaque DPA sur un tel algorithme pour un bit cible donné, on a donc à discriminer une hypothèse de sous-clé juste parmi 64 possibles.

Ainsi, en prenant seulement huit bits du mot a comme bits cibles, (un bit de sortie par table de constantes élémentaire $TC_01$ à $TC_08$), on peut découvrir jusqu'à 6x8=48 bits de la clé secrète, en faisant des attaques DPA sur chacun de ces bits cibles.

Dans le DES, on trouve donc des instructions critiques au sens des attaques DPA au début de l'algorithme et à la fin.

Au début de l'algorithme DES, les données qui peuvent être prédites à partir d'un message d'entrée M et d'une hypothèse de sous-clé, sont les données a et g calculées dans le premier tour (T1).

La donnée a du premier tour T1 (figure 3) est la donnée de sortie de l'opération SBOX du tour considéré. La donnée g est calculée à partir de la donnée a, par permutation (P PERM) et opération OU EXCLUSIF avec le paramètre d'entrée L0.

En fait, la donnée c du premier tour, est une donnée dérivée de la donnée a du premier tour. La donnée dérivée c correspond à une simple permutation de bits de la donnée a.

La donnée 1 du deuxième tour est une donnée dérivée de la donnée g du premier tour, car elle correspond à une permutation des bits du mot g, certains bits du mot g étant en outre dupliqués.

Connaissant a et g, on peut aussi connaître ces données dérivées.

Les instructions critiques du début de l'algorithme sont les instructions critiques qui manipulent soit la donnée que l'on peut prédire, comme la donnée a du premier tour, soit une donnée dérivée.

Les instructions critiques manipulant la donnée a du premier tour T1 ou la donnée dérivée c sont ainsi les instructions de fin de l'opération SBOX, de l'opération P PERM et de début de l'opération XOR du premier tour T1.

Les instructions critiques manipulant la donnée g ou des données dérivées sont toutes les instructions de de fin d'opération XOR de fin du premier tour T1 jusqu'aux instructions de début d'opération SBOX du deuxième tour T2, et de début de l'opération XOR en fin du troisième tour T3 (L2 = h(T2) = g(T1)).

En fin d'algorithme DES, les données qui peuvent être prédites à partir d'un message chiffré C et d'une hypothèse de sous-clé, sont la donnée a du seizième tour T16 et la donnée L15 égale au mot h du quatorzième tour T14.

Les instructions critiques manipulant la donnée a du seizième tour ou des données dérivées sont les instructions du seizième tour de fin d'opération SBOX, de l'opération de permutation P PERM et de début d'opération XOR.

Pour la donnée L15, les instructions critiques manipulant cette donnée ou des données dérivées sont toutes les instructions depuis les instructions de fin d'opération XOR du quatorzième tour T14, jusqu'aux instructions de début d'opération SBOX du quinzième tour T15, plus les instructions de début d'opération XOR du seizième tour T16.

Le procédé de contre-mesure selon l'invention appliqué à cet algorithme DES consiste à avoir, pour chaque instruction critique, autant de chances que l'instruction critique manipule une donnée que son complément. Ainsi, quel que soit le bit cible sur lequel l'attaque DPA peut être faite, on a autant de chances que les instructions critiques qui manipulent ce bit, manipulent un "1" ou un "0".

En pratique, ceci doit être vrai pour chacun des bits cibles potentiels : en d'autres termes, l'attaquant ayant le choix entre plusieurs attaques possibles, c'est à dire entre plusieurs fonctions de sélection booléenne possibles pour effectuer son tri de courbes, pour une hypothèse de sous-clé donnée, la mise en oeuvre du procédé de contre-mesure selon l'invention doit s'attacher à ce que les données manipulées par chacune des instructions critiques, prennent aléatoirement, une fois sur deux, une valeur ou son complément. En ce qui concerne l'application du procédé de contre-mesure selon l'invention à l'algorithme DES, il faut donc appliquer la contre-mesure aux instructions critiques de début de DES et aux instructions critiques de fin de DES, pour être totalement protégé.

Dans le DES, toutes les données manipulées par des instructions critiques sont une donnée de sortie ou des données dérivées d'une donnée de sortie d'une opération SBOX.

En effet, en début de DES, les données qui peuvent être prédites sont les données a et g du premier tour T1. La donnée a est la donnée de sortie de l'opération SBOX du premier tour. La donnée g est calculée à partir de la donnée a, puisque g = P PERM(a) XOR L0. g est donc une donnée dérivée de la donnée de sortie a de l'opération SBOX du premier tour. Ainsi, toutes les données manipulées par les instructions critiques de début de DES découlent directement ou indirectement de la donnée de sortie a de l'opération SBOX du premier tour.

En ce qui concerne la fin de DES, les données qui peuvent être prédites sont la donnée a du seizième tour T16 et la donnée g du quatorzième tour T14, g étant égale à L15.

La donnée a est la donnée de sortie de l'opération SBOX du seizième tour T16.

Quant à la donnée L15, elle se calcule, dans l'exécution normale de l'algorithme DES, à partir de la donnée de sortie a de l'opération SBOX du quatorzième tour T14 : L15 = P PERM(a) XOR L14.

Si on rend imprédictibles les données de sortie a de ces opérations SBOX particulières, on rend aussi imprédictibles toutes les données dérivées : on rend donc imprédictibles toutes les données manipulées par les instructions critiques de l'algorithme DES. Si on considère que ces opérations SBOX constituent des premiers moyens pour fournir une donnée de sortie S=a à partir d'une donnée d'entrée E=b, le procédé de contre-mesure appliqué à l'algorithme DES consiste à utiliser d'autres moyens pour rendre imprédictibles la donnée de sortie, en sorte que cette donnée de sortie et/ou des données dérivées manipulées par les instructions critiques soient toutes imprédictibles.

Selon l'invention, on forme un groupe formé des trois premiers tours au moins et un autre groupe formé des trois derniers tours au moins. Ces groupes contiennent donc tous les tours comprenant des instructions critiques.

On associe à ces deux groupes une première séquence utilisant les premiers moyens pour tous les tours et une deuxième séquence utilisant les autres moyens pour certains tours au moins.

Dans les autres tours qui ne sont pas dans ces groupes, on peut continuer à utiliser les premiers moyens.

L'utilisation de ces autres moyens est telle que le résultat en sortie, c'est à dire, le message chiffré reste juste.

Ces autres moyens peuvent comprendre plusieurs moyens différents. Ils sont tels qu'à l'une et/ou l'autre donnée parmi les données d'entrée et de sortie de premiers moyens, ils font correspondre la donnée complémentée.

Ainsi, considérant un grand nombre d'exécutions, les groupes utiliseront en moyenne une fois sur deux la première séquence, qui est la séquence normale de l'algorithme, et une fois sur deux l'autre séquence. Les données manipulées par les instructions critiques dans ces groupes, correspondant à certains résultats intermédiaires, seront donc en moyenne complémentées une fois sur deux. Sur un grand nombre de courbes on aura donc statistiquement autant de chances qu'un bit cible donné soit à 1 ou à 0.

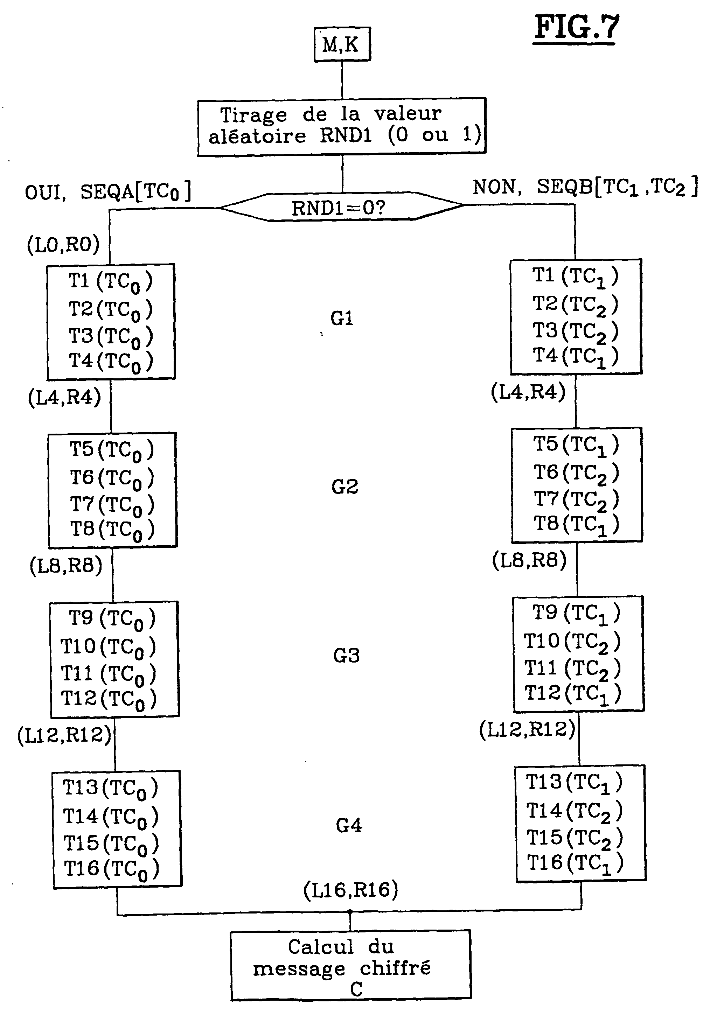

La figure 7 représente un premier mode de réalisation de l'invention.

Dans ce mode de réalisation, on répartit les seize tours de l'algorithme DES en quatre groupes G1 à G4 de quatre tours successifs. Le groupe G1 comprend ainsi les tours T1 à T4, le groupe G2, les tours T5 à T8, le groupe G3, les tours T9 à T12 et le groupe G4, les tours T13 à T16.

A chaque groupe, on associe deux séquences. Une première séquence SEQA consiste à utiliser les premiers moyens $TC_0$ pour chaque tour. Une deuxième séquence SEQB consiste à utiliser d'autres moyens pour certains tours au moins.

Dans l'exemple représenté, ces autres moyens comprennent des deuxièmes moyens $TC_2$ et des troisièmes moyens $TC_1$.

Les deuxièmes moyens $TC_2$ sont utilisés dans le deuxième tour et l'avant-dernier tour de chaque groupe : c'est à dire, dans T2, T3 de G1, T6, T7 de G2, T10, T11 de G3 et T14 et T15 de G4.

Les troisièmes moyens $TC_1$ sont utilisés dans le premier tour et le dernier tour de chaque groupe. C'est à dire dans T1, T4 de G1, T5, T8 de G2, T9, T12 de G3 et T13, T16 de G4.

En pratique, ces différents moyens sont des tables de constantes les premiers moyens correspondent à la première table de constantes $TC_0$, correspondant à l'exécution normale du DES. Les autres moyens $TC_1$ et $TC_2$ se définissent par rapport à cette première table de constantes $TC_0$, par complémentation.

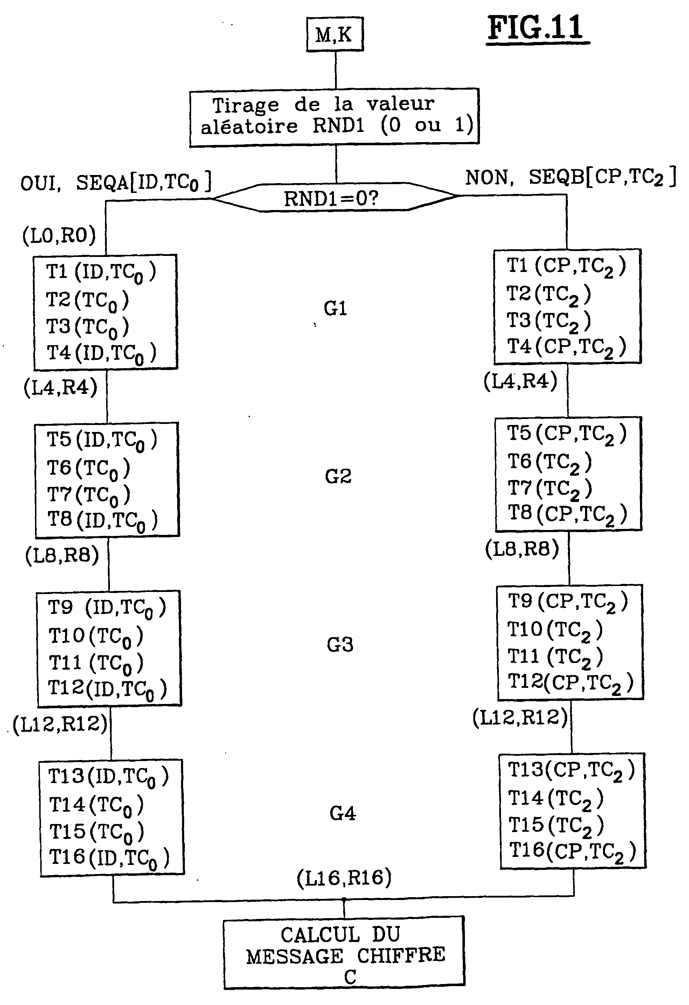

Les deuxièmes moyens $TC_2$ sont tels que pour le complément /E de la donnée d'entrée E, ils fournissent le complément de la donnée de sortie S des premiers moyens $TC_0$. Un exemple d'une deuxième table élémentaire $TC_21$ correspondant à la première table de constante élémentaire $TC_01$ est représenté sur la figure 9. On notera que la notation du complément /E utilisée dans le texte, correspond la notation avec une barre au-dessus de la donnée complémentée sur les dessins.

Les troisièmes moyens sont tels que pour la donnée d'entrée E, ils fournissent le complément /S de la donnée de sortie S des premiers moyens $TC_0$. Un exemple d'une troisième table élémentaire $TC_11$ correspondant à la première table de constante élémentaire $TC_01$ est représenté sur la figure 10.

Le programme de calcul consiste alors au début de l'exécution de l'algorithme, à tirer une valeur aléatoire RND1 égale à 0 ou à 1, puis à tester cette valeur RND1. Dans l'exemple, si RND1 vaut 1, on effectue le calcul en utilisant la deuxième séquence SEQB pour chaque groupe G1 à G4.

Si RND1 vaut 0, on effectue le calcul en utilisant la première séquence SEQA pour chaque groupe.

Que l'on utilise la première ou la deuxième séquence, on obtient, à la sortie de chaque groupe, le résultat juste pour les paramètres de sortie. Ainsi, les paramètres de sortie L4 et R4 du premier groupe G1, L8 et R8 du deuxième groupe G2, L12 et R12 du troisième groupe G3, L16 et R16 du quatrième groupe G4 sont justes quelle que soit la séquence utilisée.

Quand on a effectué tous les tours, on obtient les paramètres justes L16 et R16 qui vont permettre de calculer le message chiffré C juste.

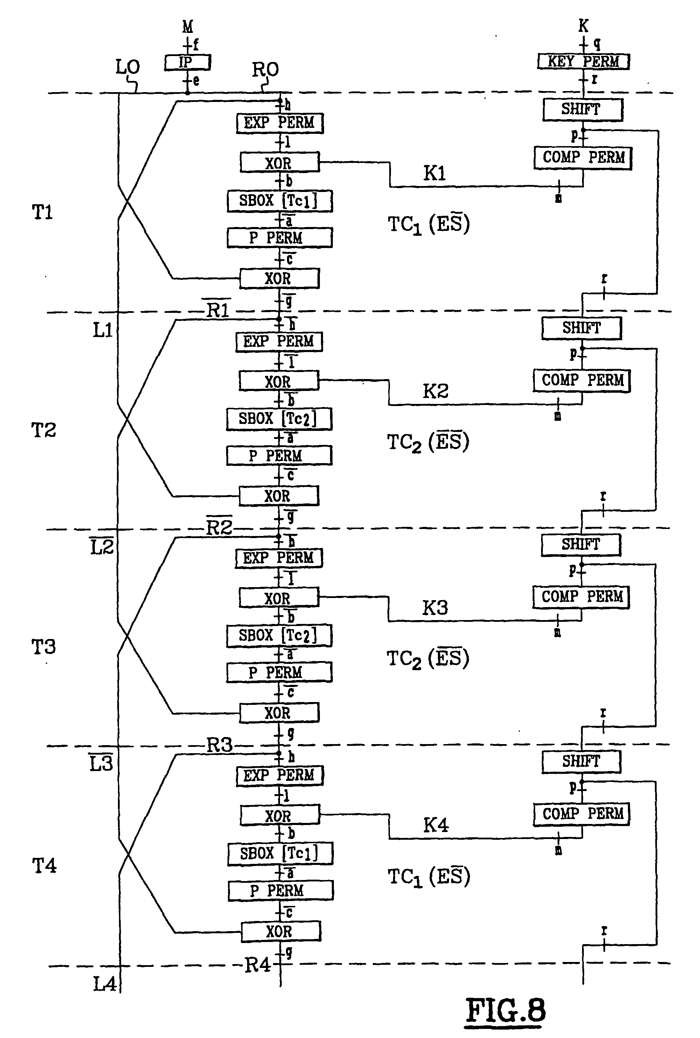

Par contre, à l'intérieur des groupes, certains résultats intermédiaires n'ont pas les mêmes valeurs selon la séquence utilisée, mais des valeurs complémentaires, comme on va le montrer par référence aux figures 3 et 8.

La figure 3 déjà décrite correspond en fait à l'organigramme de calcul des quatre tours T1, T2, T3 et T4 du premier groupe G1, dans la première séquence SEQA.

La figure 8 montre l'organigramme détaillé des quatre tours T1, T2, T3 et T4 du premier groupe G1, dans la deuxième séquence SEQB.

Dans cette deuxième séquence, le tour T1 utilise les troisièmes moyens $TC_1$. En sortie de l'opération SBOX, on obtient donc la donnée /a (Figure 8), au lieu de la donnée a avec la première séquence SEQA (Figure 3).

L'opération P PERM du tour T1 qui est une simple permutation va donc également fournir en sortie une donnée complémentée /c par rapport à la séquence SEQA.

La donnée g qui est obtenue par un OU EXCLUSIF entre une donnée complémentée /c et une donnée non complémentée L0, va aussi fournir en sortie une donnée complémentée /g.

Ainsi, avec les troisièmes moyens du tour T1 on obtient toutes les données complémentées suivantes, par rapport aux données qui seraient obtenues avec la séquence SEQA :

-   dans le tour T1 : /a, /c, /g;
-   dans le tour T2 : /R1, /h, /l, /b;
-   dans le tour T3 : /L2.

On arrive alors aux deuxièmes moyens $TC_2$ utilisés dans le tour T2. D'après leur définition, en appliquant la donnée complémentée /b, on obtient en sortie la donnée complémentée /a. En conduisant ce raisonnement jusqu'à la fin du tour T4, en remarquant qu'un OU EXCLUSIF entre deux données complémentées donne un résultat non complémenté (par exemple /L3 XOR /c = g dans le tour T4), on obtient en sortie du tour $T_4$, les données L4, R4 non complémentées.

En outre, on constate que pour toutes les instructions critiques de début de DES, les instructions critiques vont manipuler, de manière aléatoire en fonction de la donnée RND1, les données ou leurs compléments selon que la séquence exécutée est la première SEQA ou la deuxième SEQB.

Le procédé de contre-mesure, dans ce premier mode de réalisation est donc très intéressant. Il ne nécessite que deux opérations supplémentaires, dans le programme de calcul du DES qui sont le tirage de la valeur aléatoire et le test de cette valeur. La mémoire programme doit, elle, contenir les trois moyens différents utilisés, c'est à dire les trois tables de constantes $TC_0$, $TC_1$, $TC_2$.

En revenant à la figure 7, on pourra noter, que l'on n'a pas besoin de contre-mesure dans les groupes du milieu G2 et G3, puisqu'ils ne contiennent pas d'instructions critiques au sens attaque DPA. On pourrait donc n'appliquer le procédé de contre-mesure avec ses deux séquences SEQA et SEQB qu'au premier et au dernier groupe G1 et G4. Il suffirait d'appliquer systématiquement la première séquence SEQA aux groupes G2 et G3.

Mais le fait de d'appliquer le procédé de contre-mesure à tous les groupes donne une cohérence à l'ensemble.

Ainsi, on associe de préférence les deux séquences SEQA et SEQB à chacun des groupes G1 à G4.

Un deuxième mode de réalisation du procédé de contre-mesure selon l'invention est représenté sur la figure 11. Ce deuxième mode de réalisation est en fait une variante du premier. L'intérêt de cette variante est de n'utiliser comme autres moyens dans la séquence SEQB, que les deuxièmes moyens $TC_2$. En effet, on a vu que les différents moyens $TC_0$, $TC_1$, $TC_2$ correspondent en pratique à des tables de constantes comprenant chacune huit tables de constantes élémentaires, ce qui occupe un espace non négligeable en mémoire programme.

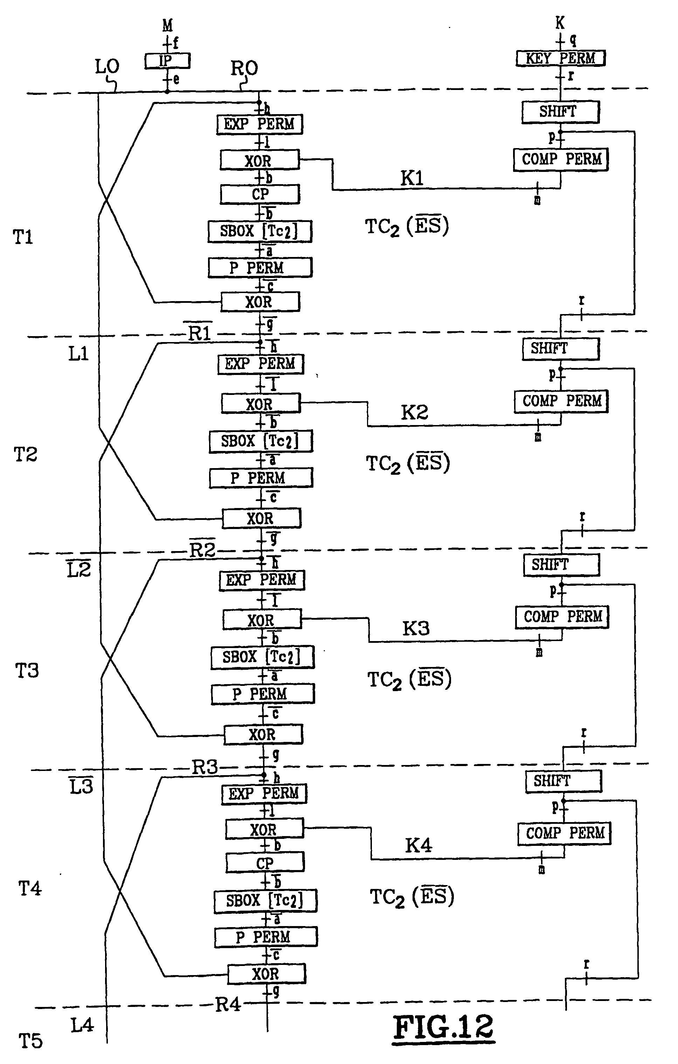

Cette variante consiste donc à utiliser uniquement les deuxièmes moyens $TC_2$ dans la séquence SEQB. Pour cela, on prévoit dans le programme de calcul des premiers et derniers tours de chaque groupe, une opération supplémentaire CP, pour complémenter la donnée d'entrée appliquée aux deuxièmes moyens. Cette opération supplémentaire CP est en pratique un OU exclusif de la donnée d'entrée avec des 1 logiques. Si on se reporte à la figure 12 représentant l'organigramme détaillé de la deuxième séquence SEQB de calcul des quatre tours T1 à T4 du premier groupe $G_1$, il s'agit de complémenter la donnée b avant de l'appliquer en entrée de l'opération SBOX des tours T1 et $T_4$. Comme les deuxièmes moyens $TC_2$ complémentent l'entrée, l'opération de complémentation CP plus les deuxièmes moyens $TC_2$ équivalent aux troisièmes moyens $TC_1$ utilisés dans le premier mode de réalisation de l'invention, c'est à dire à une donnée non complémentée en entrée.

Mais pour que le procédé de contre-mesure selon ce deuxième mode de réalisation soit efficace, il faut que le nombre d'instructions soit exactement le même quelle que soit la séquence de calcul utilisée. En effet si une différence quelconque existait entre les deux séquences SEQA et SEQB possibles, il y aurait alors une possibilité d'attaque DPA fructueuse.

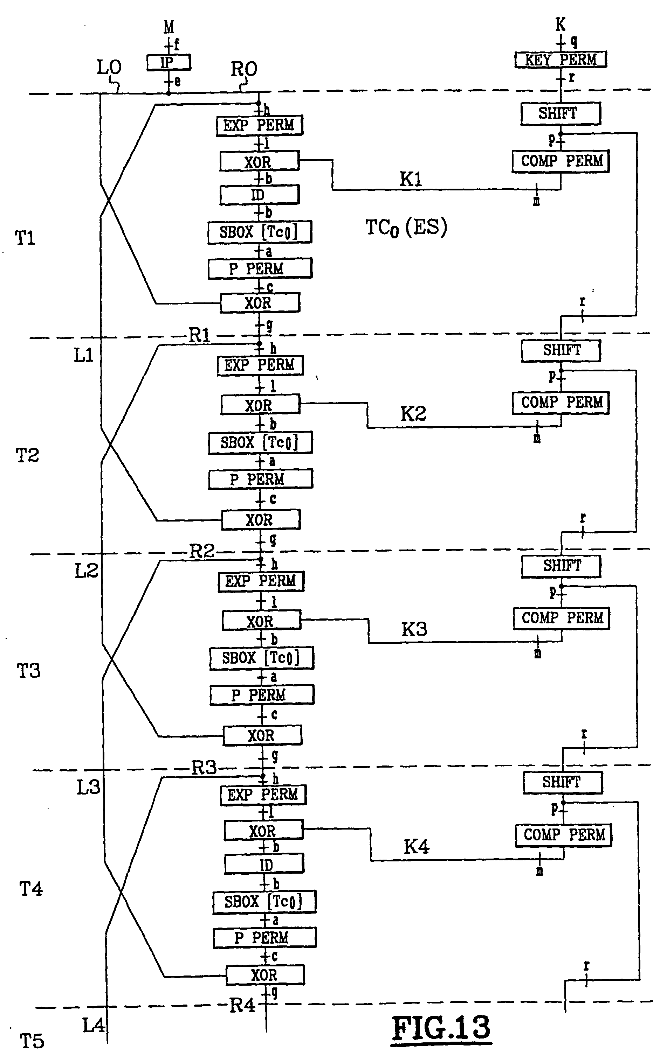

Pour cette raison et comme représenté sur la figure 13, on prévoit dans les tours T1 et T4 de la première séquence SEQA, une opération ID de recopie à l'identique, qui consiste en un OU exclusif avec des O logiques en entrée de l'opération SBOX, pour ne pas modifier la donnée d'entrée tout en appliquant les mêmes instructions que pour l'opération supplémentaire CP.

De cette manière, on a le même nombre d'instructions dans les deux séquences.

Ces opérations CP ou ID sont donc prévues en entrée des moyens utilisés dans chacun des premiers et derniers tours de chaque groupe G1 à G4.

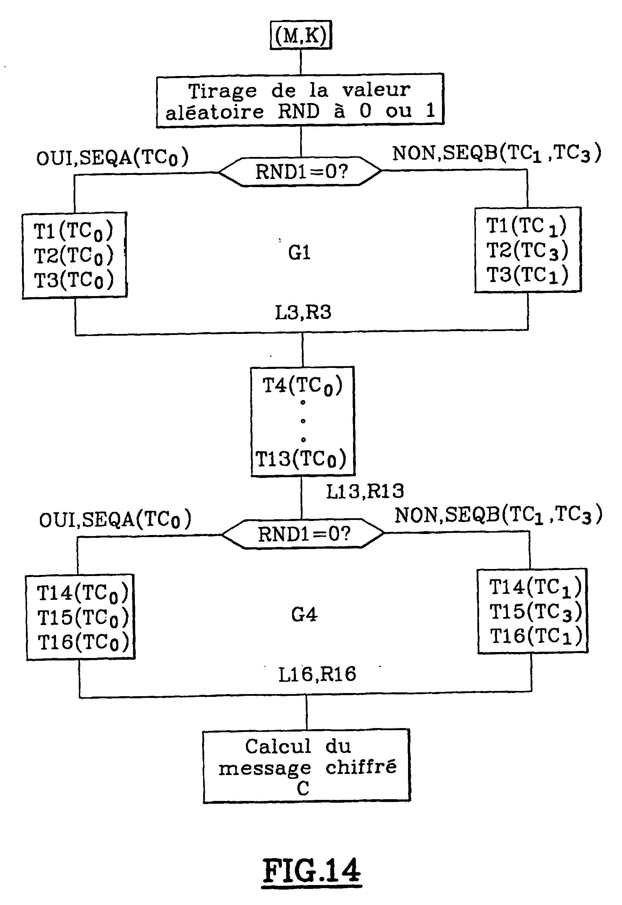

La figure 14 représente un troisième mode de réalisation du procédé de contre-mesure selon l'invention.

Dans ce mode de réalisation, on forme un premier groupe G1 avec les trois premiers tours T1, T2, T3 et un autre groupe G4 avec les trois derniers tours T14, T15, T16. On associe à chaque groupe une première séquence SEQA utilisant les premiers moyens $TC_0$ pour chaque tour et une deuxième séquence utilisant d'autres moyens pour certains tours au moins.

En sortie de chaque groupe G1, G4, on obtient le bon résultat en sortie L3, R3 et L16, R16, quelle que soit la séqence SEQA ou SEQB utilisée.

Les autres moyens sont dans l'exemple les troisièmes moyens $TC_1$ déjà vus en relation avec le premier mode de réalisation et des quatrièmes moyens $TC_3$.

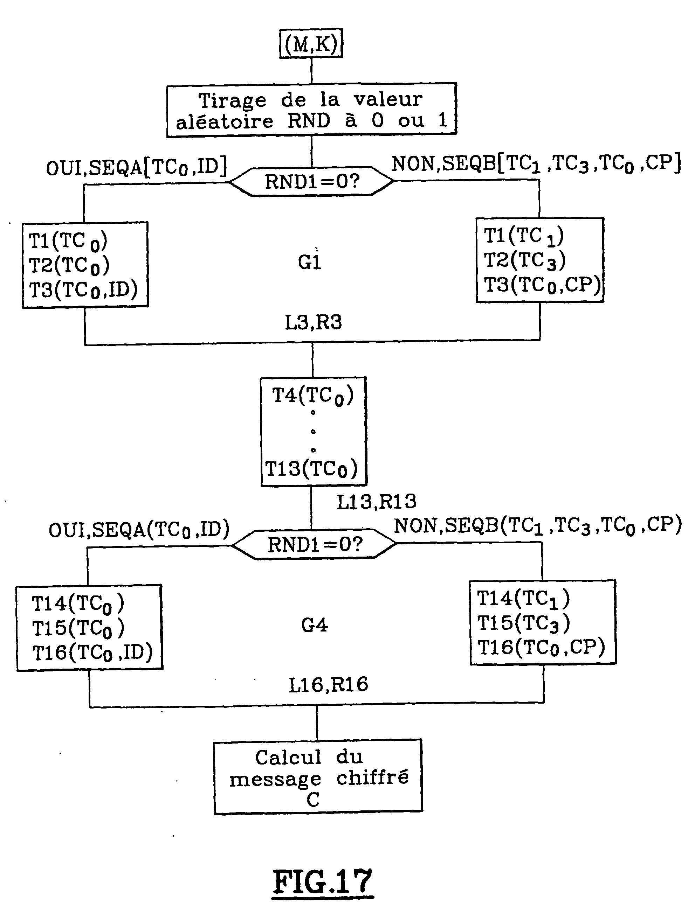

Ces quatrièmes moyens $TC_3$ sont définis par rapport aux premiers moyens $TC_0$, comme faisant correspondre la donnée S de sortie, au complément /E de la donnée E d'entrée. Une table de constantes élémentaire $TC_31$ correspondante est représentée sur la figure 16.

Pour les autres tours non compris dans les groupes, c'est à dire pour les tours T4 à T13, on applique les premiers moyens $TC_0$.

Ainsi, après avoir tiré la valeur aléatoire RND1, on teste cette valeur pour déterminer la séquence à appliquer au premier groupe, on continue en sortie avec les paramètres L3, R3 calculés, en exécutant les tours suivants avec les premiers moyens $TC_0$. En fin de tour T13, on applique la séquence déterminée par la valeur aléatoire RND1 au groupe G4. On obtient les paramètres L16, R16 qui vont servir à calculer le message chiffré C.

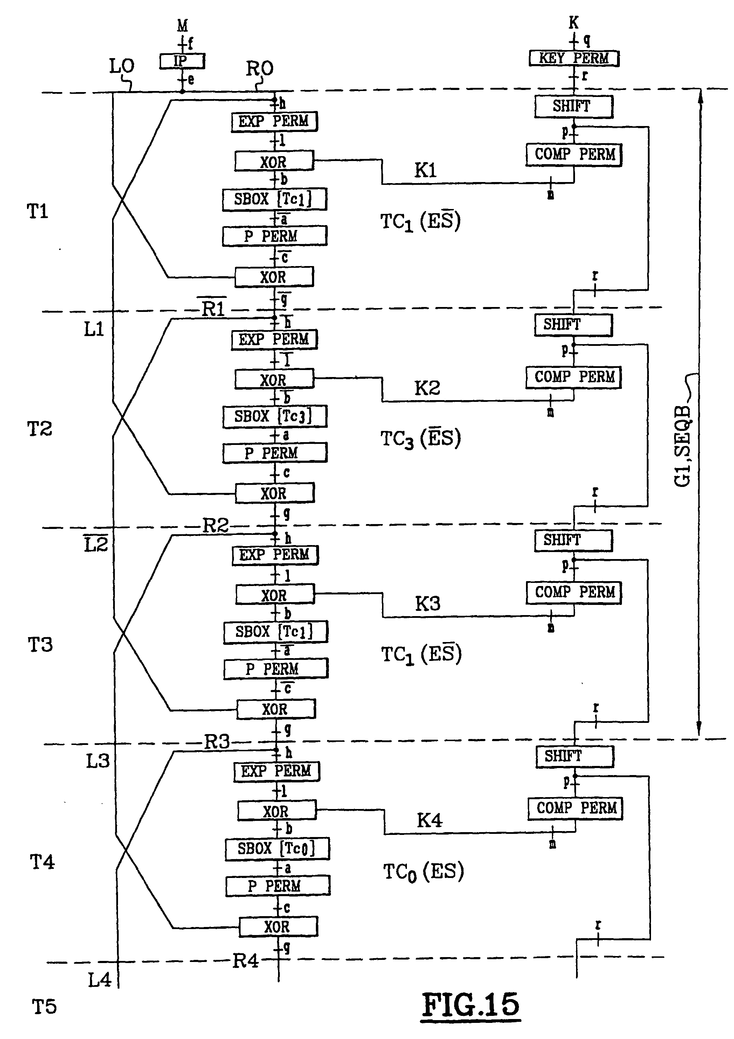

La figure 15 est un organigramme détaillé correspondant, pour la deuxième séquence SEQB.

Il apparaît clairement sur cet organigramme que l'on obtient des données complémentées (la complémentation étant notée par une barre au-dessus de la donnée) pour toutes les instructions critiques de ces tours. Et les données L3 et R3 en sortie du troisième tour ne sont pas complémentées. On peut continuer l'exécution de l'algorithme, en passant au tour T4 auquel on applique les premiers moyens $TC_0$ selon l'exécution normale de l'algorithme.

Sur cette figure, on peut remarquer que dans l'opération SBOX du troisième tour T3, on pourrait utiliser les premiers moyens $TC_0$ à la place des troisièmes moyens $TC_1$, en prévoyant une opération supplémentaire de complémentation CP en sortie de l'opération SBOX. C'est une solution équivalente.

Il faut alors faire correspondre à cette opération supplémentaire de complémentation dans la séquence SEQB, l'opération supplémentaire de recopie à l'identique ID dans la séquence SEQA.

La figure 17 représente un organigramme d'exécution utilisant cette variante. Pour le troisième tour des deux groupes G1 et G4, on utilise dans la première séquence SEQA, les premiers moyens $TC_0$ suivis en sortie de l'opération supplémentaire ID de recopie, ce qui est noté T3 ($TC_0$, ID). Dans la deuxième séquence SEQB, on utilise pour le troisième tour les premiers moyens $TC_0$ suivis en sortie de l'opération supplémentaire de complémentation CP ce qui est noté T3 ($TC_0$, CP).

Ainsi, le deuxième mode de réalisation et cette variante du troisième mode de réalisation montrent l'utilisation d'opérations supplémentaires en entrée ou en sortie des différents moyens.

De manière générale, dans le procédé de contre-mesure selon l'invention, on peut donc prévoir dans la deuxième séquence SEQB et pour un ou plusieurs tours, une opération supplémentaire de complémentation CP en entrée ou en sortie des moyens utilisés. A chaque opération supplémentaire de complémentation CP dans la deuxième séquence correspond alors une opération supplémentaire de recopie à l'identique ID dans la première séquence SEQA.

La présente invention s'applique à l'algorithme de cryptographie à clé secrète DES, pour lequel plusieurs exemples d'application non limitatifs ont été décrits. Il s'applique plus généralement dans un algorithme de cryptographie à clé secrète à seize tours de calculs, dont les instructions critiques se situent parmi les instructions des trois premiers ou trois derniers tours.

Un composant électronique 1 mettant en oeuvre un procédé de contre-mesure selon l'invention dans un algorithme de cryptographie à clé secrète DES, comprend typiquement, comme représenté sur la figure 18, un microprocesseur mP, une mémoire programme 2 et une mémoire de travail 3. Pour pouvoir gérer l'utilisation des différents moyens $TC_0$, $TC_1$, $TC_2$ selon l'invention, qui sont, en pratique, des tables de constantes mémorisées en mémoire programme, des moyens 4 de génération d'une valeur aléatoire entre 0 et 1, sont prévus qui, si on se reporte aux organigrammes des figures 7 et 11, fourniront la valeur de RND1 à chaque exécution du DES. Un tel composant peut tout particulièrement être utilisé dans une carte à puce 5, pour améliorer leur inviolabilité.

## Revendications

1. Procédé de contre-mesure dans un composant électronique mettant en oeuvre un algorithme cryptographique à clé secrète (K) du type DES pour calculer un message chiffré (C) à partir d'un message d'entrée (M), la mise en oeuvre de l'algorithme comprenant seize tours de calcul (T1, ...,T16), chaque tour utilisant des premiers moyens ($TC_0$), du type table de constantes, pour fournir une donnée de sortie à partir d'une donnée d'entrée, la donnée de sortie et/ou des données dérivées étant manipulées par des instructions critiques au sens des attaques contre-mesure au début et à la fin de l'algorithme, dans les trois premiers (T1, T2, T3) et les trois derniers tours (T14, T15, T16), **caractérisé en ce que** l'on forme un groupe (G1) comprenant les trois premiers tours au moins et un autre groupe (G4) comprenant les trois derniers tours au moins, et **en ce que** l'on associe à chacun de ces groupes (G1 et G4) une première séquence (SEQA) utilisant les premiers moyens ($TC_0$) dans chaque tour et une deuxième séquence (SEQB) utilisant d'autres moyens ($TC_1$, $TC_2$, $TC_3$), du type table de constantes, dans certains tours au moins, les autres moyens complémentant l'une et/ou l'autre des données d'entrée (E) et/ou de sortie (S) des premiers moyens, les dites première et deuxième séquences étant telles qu'elles fournissent un même résultat en sortie du dernier tour de chaque groupe pour un même message d'entrée (M) donné, le choix de la séquence à exécuter dans les groupes concernés étant fonction d'une loi statistique de probabilité un demi, pour rendre imprédictibles toutes les données manipulées par les dites instructions critiques et se faisant au début de l'exécution de l'algorithme par tirage d'une valeur aléatoire (RND1), la séquence choisie étant celle utilisée dans chacun des groupes concernés et **en ce que** le nombres d'instructions soit exactement le même quelque soit la séquence de calcul utilisée.

2. Procédé de contre-mesure selon la revendication 1, **caractérisé en ce que** la deuxième séquence (SEQB) comprend pour un ou plusieurs tours une opération supplémentaire de complémentation (CP) en entrée ou en sortie des moyens utilisés, et **en ce qu'**à chaque opération supplémentaire de complémentation dans la deuxième séquence correspond une opération supplémentaire de recopie à l'identique (ID) dans la première séquence (SEQA).

3. Procédé de contre-mesure selon l'une quelconque des revendications précédentes, **caractérisé en ce que** l'on forme quatre groupes (G1,...G4) de quatre tours successifs chacun (T1,...T4), **en ce que** l'on associe à chaque groupe la première séquence (SEQA) et **en ce que** l'on associe au moins au premier groupe (G1) et au dernier groupe (G4) la deuxième séquence (SEQB).

4. Procédé de contre-mesure selon la revendication 3, **caractérisé en ce que** la deuxième séquence (SEQB) est associée à chacun des groupes (G1,... G4).

5. Procédé de contre-mesure selon l'une quelconque des revendications 1 à 2, **caractérisé en ce que** le premier groupe (G1) est formé des trois premiers tours (T1, T2, T3) et **en ce que** le dernier groupe est formé des trois derniers tours (T14, T15, T16).

6. Composant électronique de sécurité comprenant un microprocesseur µP, une mémoire programme (2) et une mémoire de travail (3), permettant la mise en oeuvre de toutes les étapes du procédé de contre-mesure selon l'une quelconque des revendications précédentes, **caractérisé en ce que** les différents moyens ($TC_0$, $TC_1$, $TC_2$) pour fournir une donnée de sortie à partir d'une donnée d'entrée sont fixés en mémoire programme du dit composant et **en ce qu'**il comprend des moyens (4) de génération d'une valeur aléatoire (RND1) à 0 ou à 1 pour gérer l'utilisation des dits différents moyens.

7. Carte à puce comprenant un composant électronique de sécurité selon la revendication 7.

## Patentansprüche

1. Einen kryptographischen Algorithmus mit geheimem Schlüssel (K) vom Typ DES zur Berechnung einer chiffrierten Meldung (C) ausgehend von einer Eingangsmeldung (M) umsetzendes Gegenmaßnahmen-Verfahren in einer elektronischen Komponente, wobei die Umsetzung des Algorithmus sechzehn Berechnungssätze (T1, ..., T16) umfasst, wobei jeder Satz erste Mittel ($TC_0$) vom Typ Konstantentabelle einsetzt, um eine Ausgangsangabe ausgehend von einer Eingangsangabe zu liefern, wobei die Ausgangs- und / oder die abgeleiteten Angaben durch im Sinne von Gegenmaßnahmen-Angriffen zu Beginn und am Ende des Algorithmus kritische Anweisungen in den drei letzten (T1, T2, T3) und den letzten drei Sätzen (T14, T15, T16) behandelt werden, **dadurch gekennzeichnet, dass** man eine die wenigstens die drei ersten Sätze umfassende Gruppe (G1) bildet und eine wenigstens die drei letzten Sätze umfassende andere Gruppe (G4) und dass man jeder dieser Gruppen (G1 und G4) eine die ersten Mittel ($TC_0$) in jedem Satz einsetzende erste Sequenz (SEQA) und eine weitere Mittel ($TC_1$, $TC_2$, $TC_3$) vom Typ Konstantentabelle wenigstens in bestimmten Berechnungen einsetzende zweite Sequenz (SEQB) zuordnet, wobei die anderen Mittel die eine und / oder die andere Eingangs- (E) und / oder Ausgangseingabe (S) der ersten Mittel komplementieren, wobei die genannten ersten und zweiten Sequenzen derart sind, dass sie ein und dasselbe Ergebnis am Ausgang des ersten Satzes jeder Gruppe für ein und die dieselbe bestimmte Eingangsmeldung (M) liefern, wobei die Wahl der in den betroffenen Gruppen auszuführenden Sequenz von einem statistischen Wahrscheinlichkeitsgesetz ein Halb abhängt, um alle von den genannten kritischen Anweisungen behandelten Angaben unvorhersagbar zu machen, und zwar zu Beginn der Ausführung des Algorithmus durch Ermittlung eines zufälligen Wertes (RND1), wobei die gewählte Sequenz diejenige ist, die in jeder der betroffenen Gruppen eingesetzt wird, und dass die Anzahlen von Anweisungen genau dieselben sind wie die eingesetzte Berechnungssequenz.

2. Gegenmaßnahmen-Verfahren gemäß Anspruch 1, **dadurch gekennzeichnet, dass** die zweite Sequenz (SEQB) bei einem oder mehreren Sätzen eine zusätzliche Komplementierungsoperation (CP) am Eingang oder am Ausgang der eingesetzten Mittel umfasst und dass jeder zusätzlichen Komplementierungsoperation in der zweiten Sequenz eine zusätzliche Operation der identischen Kopie (ID) in der ersten Sequenz entspricht.

3. Gegenmaßnahmenverfahren gemäß einem der vorherigen Ansprüche, **dadurch gekennzeichnet, dass** man vier Gruppen (G1, ..., G4) von vier jeweils aufeinander folgenden Sätzen (T1, ..., T4) bildet, dass man jeder Gruppe die erste Sequenz (SEQA) zuordnet und dass man wenigstens der ersten Gruppe (G1) und der letzten Gruppe (G4) die zweite Sequenz (SEQB) zuordnet.

4. Gegenmaßnahmenverfahren gemäß Anspruch 3, **dadurch gekennzeichnet, dass** die zweite Sequenz (SEQB) jeder Gruppe (G1, ..., G4) zugeordnet ist.

5. Gegenmaßnahmenverfahren gemäß Anspruch 1 bis 2, **dadurch gekennzeichnet, dass** die erste Gruppe (G1) aus den drei ersten Sätzen (T1, T2, T3) gebildet wird und dass die letzte Gruppe aus den drei letzten Sätzen (T14, T15, T16) gebildet wird.

6. Elektronische Sicherheitskomponente mit einem Mikroprozessor µP, einem Programmspeicher (2) und einem Arbeitsspeicher (3), die die Umsetzung aller Stufen des Gegenmaßnahmen-Verfahrens gemäß einem der vorherigen Ansprüche erlaubt, **dadurch gekennzeichnet, dass** die unterschiedlichen Mittel ($TC_0$, $TC_1$, $TC_2$) zur Lieferung einer Ausgangsangabe ausgehend von einer Eingangsangabe im Speicherprogramm der genannten Komponente fixiert sind und dass sie Mittel (4) zum Erzeugen eines zufälligen Wertes (RND1) von 0 bis 1 zum Verwalten des Einsatzes der genannten unterschiedlichen Mittel umfasst.

7. Chipkarte mit einer elektronischen Sicherheitskomponente gemäß Anspruch 7.

## Claims

1. A countermeasure method in an electronic component using a secret key cryptographic algorithm (K) of the DES type for calculating an enciphered message (C) from an input message (M), the use of the algorithm comprising sixteen calculation turns (T1, ..., T16), each turn using first means ($TC_0$), of the table of constants type, for supplying an output data item from an input data item, the output data item and/or derived data being manipulated by critical instructions within the meaning of the countermeasure attacks at the start and end of the algorithm, in the first three (T1, T2, T3) and last three turns (T14, T15, T16), **characterised in that** a group (G1) is formed comprising at least the first three turns and another group (G4) comprising at least the last three turns, and **in that** there is associated with each of these groups (G1 and G4) a first sequence (SEQA) using the first means ($TC_0$) in each turn and a second sequence (SEQB) using other means ($TC_1$, $TC_2$, $TC_3$), of the table of constants type, in at least some turns, the other means complementing one or other or both of the input (E) and/or output (S) data of the first means, the said first and second sequences being such that they provide one and the same result at the output of the last turn of each group for the same given input message (M), the choice of the sequence to be executed in the groups concerned being a function of a statistical law with a probability of one half, in order to make unpredictable all the data manipulated by the said critical instructions and being done at the start of execution of the algorithm by drawing a random value (RND1), the chosen sequence being the one used in each of the groups concerned and **in that** the numbers of instructions are exactly the same whatever the calculation sequence used.

2. A countermeasure method according to Claim 1, **characterised in that** the second sequence (SEQB) comprises, for one or more turns, an additional complementation operation (CP) at the input or output of the means used, and **in that**, to each additional complementation operation in the second sequence, there corresponds an additional operation of copying identically (ID) in the first sequence (SEQA).

3. A countermeasure method according to any one of the preceding claims, **characterised in that** four groups (G1, .... G4) each of four successive turns (T1, .... T4) are formed, **in that** the first sequence (SEQA) is associated with each group and **in that** the second sequence (SEQB) is associated at least with the first group (G1) and the second group (G4).

4. A countermeasure method according to Claim 3, **characterised in that** the second sequence (SEQB) is associated with each of the groups (G1, .... G4).

5. A countermeasure method according to either one of Claims 1 to 2, **characterised in that** the first group (G1) is formed from the first three turns (T1, T2, T3) and **in that** the last group is formed from the last three turns (T14, T15, T16).

6. An electronic security component comprising a microprocessor $\mu$p, a program memory (2) and a working memory (3), allowing the implementation of all the steps of the countermeasure method according to any one of the preceding claims, **characterised in that** the various means ($TC_0$, $TC_1$, $TC_2$) for supplying an output data item from an input data item are fixed in the program memory of the said component and **in that** it comprises means (4) of generating a random value (RND1) at 0 or 1 in order to manage the use of the said various means.

7. A chip card comprising an electronic security component according to Claim 7.

## FIG.1

DPA(t), t, TC1, TC2, TC3, TC4, TC5, TC6

## FIG.2

DPA(t)

t

EP 1 119 940 B1

**FIG.3**

**FIG.4**

EP 1 119 940 B1

## FIG.5

## FIG.6

TC₀1

| E=b1b2b3b4b5b6 | S=a1a2a3a4 |
|---|---|
| 000000 | 1101 |
| 000001 | 0101 |
| ⋮ | ⋮ |
| 111111 | 1010 |

## FIG.10

TC₁1

| E=b1b2b3b4b5b6 | /S=a1a2a3a4 |
|---|---|
| 000000 | 0010 |
| 000001 | 1010 |
| ⋮ | ⋮ |
| 111111 | 0101 |

## FIG.9

TC₂1

| /E=b1b2b3b4b5b6 | /S=a1a2a3a4 |
|---|---|
| 000000 | 0101 |
| ⋮ | ⋮ |
| 111110 | 1010 |
| 111111 | 0010 |

## FIG.16

TC₃1

| /E=b1b2b3b4b5b6 | S=a1a2a3a4 |
|---|---|
| 000000 | 1010 |
| ⋮ | ⋮ |
| 111110 | 0101 |
| 111111 | 1101 |

## FIG.18

17

# FIG.7

M,K

Tirage de la valeur
aléatoire RND1 (0 ou 1)

OUI, SEQA[$TC_0$]

NON, SEQB[$TC_1$,$TC_2$]

RND1=0?

(L0,R0)

T1($TC_0$)
T2($TC_0$)
T3($TC_0$)
T4($TC_0$)

G1

T1($TC_1$)
T2($TC_2$)
T3($TC_2$)
T4($TC_1$)

(L4,R4)

(L4,R4)

T5($TC_0$)
T6($TC_0$)
T7($TC_0$)
T8($TC_0$)

G2

T5($TC_1$)
T6($TC_2$)
T7($TC_2$)
T8($TC_1$)

(L8,R8)

(L8,R8)

T9($TC_0$)
T10($TC_0$)
T11($TC_0$)
T12($TC_0$)

G3

T9($TC_1$)
T10($TC_2$)
T11($TC_2$)
T12($TC_1$)

(L12,R12)

(L12,R12)

T13($TC_0$)
T14($TC_0$)
T15($TC_0$)
T16($TC_0$)

G4

T13($TC_1$)
T14($TC_2$)
T15($TC_2$)
T16($TC_1$)

(L16,R16)

Calcul du
message chiffré
C

FIG.8

## FIG.11

M,K

Tirage de la valeur
aléatoire RND1 (0 ou 1)

OUI, SEQA[ID,$TC_0$]     RND1=0?     NON, SEQB[CP,$TC_2$]

(L0,R0)

$T1(ID,TC_0)$
$T2(TC_0)$
$T3(TC_0)$
$T4(ID,TC_0)$

G1

$T1(CP,TC_2)$
$T2(TC_2)$
$T3(TC_2)$
$T4(CP,TC_2)$

(L4,R4)

(L4,R4)

$T5(ID,TC_0)$
$T6(TC_0)$
$T7(TC_0)$
$T8(ID,TC_0)$

G2

$T5(CP,TC_2)$
$T6(TC_2)$
$T7(TC_2)$
$T8(CP,TC_2)$

(L8,R8)

(L8,R8)

$T9(ID,TC_0)$
$T10(TC_0)$
$T11(TC_0)$
$T12(ID,TC_0)$

G3

$T9(CP,TC_2)$
$T10(TC_2)$
$T11(TC_2)$
$T12(CP,TC_2)$

(L12,R12)

(L12,R12)

$T13(ID,TC_0)$
$T14(TC_0)$
$T15(TC_0)$
$T16(ID,TC_0)$

G4

$T13(CP,TC_2)$
$T14(TC_2)$
$T15(TC_2)$
$T16(CP,TC_2)$

(L16,R16)

CALCUL DU
MESSAGE CHIFFRE
C

**FIG.12**

**FIG.13**

$(M,K)$

Tirage de la valeur
aléatoire RND à 0 ou 1

OUI,SEQA($TC_0$)          RND1=0?          NON,SEQB($TC_1$,$TC_3$)

T1($TC_0$)
T2($TC_0$)          G1          T1($TC_1$)
T3($TC_0$)                      T2($TC_3$)
                                T3($TC_1$)

L3,R3

T4($TC_0$)
.
.
.
T13($TC_0$)

L13,R13

OUI,SEQA($TC_0$)          RND1=0?          NON,SEQB($TC_1$,$TC_3$)

T14($TC_0$)          G4          T14($TC_1$)
T15($TC_0$)                      T15($TC_3$)
T16($TC_0$)                      T16($TC_1$)

L16,R16

Calcul du
message chiffré
C

## FIG.14

**FIG.15**

(M,K)

Tirage de la valeur
aléatoire RND à 0 ou 1

OUI,SEQA[$TC_0$,ID]      RND1=0?      NON,SEQB[$TC_1$,$TC_3$,$TC_0$,CP]

T1($TC_0$)
T2($TC_0$)
T3($TC_0$,ID)

G1

T1($TC_1$)
T2($TC_3$)
T3($TC_0$,CP)

L3,R3

T4($TC_0$)
.
.
.
T13($TC_0$)

L13,R13

OUI,SEQA($TC_0$,ID)      RND1=0?      NON,SEQB($TC_1$,$TC_3$,$TC_0$,CP)

T14($TC_0$)
T15($TC_0$)
T16($TC_0$,ID)

G4

T14($TC_1$)
T15($TC_3$)
T16($TC_0$,CP)

L16,R16

Calcul du
message chiffré
C

## FIG.17